# EUROPÄISCHE PATENTSCHRIFT

(11) **EP 1 189 499 B1**
(45) Veröffentlichungstag und Bekanntmachung des Hinweises auf die Patenterteilung: **12.02.2003**
(21) Anmeldenummer: 01923615.7
(22) Anmeldetag: 01.03.2001
(51) Int. Cl.: A01G 9/10, A01G 9/02

(54) **PFLANZTOPF AUS NACHWACHSENDEM MATERIAL**
PLANTING POT FROM REPRODUCTIVE MATERIAL
POT DE PLANTATION CONSTITUE DE MATIERE RENOUVELABLE

(30) Priorität: 28.04.2000 DE 20007750 U; 28.04.2000 DE 20007748 U
(43) Veröffentlichungstag der Anmeldung: 27.03.2002
(73) Patentinhaber: Wibmer GmbH u. Co. Kommanditgesellschaft Papier - Formtechnik, D-72124 Pliezhausen (DE)
(72) Erfinder: WIBMER, Albert, 72760 Reutlingen (DE); WALZ, Reinhold, 71088 Holzgerlingen (DE)
(74) Vertreter: Wolff, Michael, Dipl.-Phys.
(86) Internationale Anmeldenummer: EP0102290
(87) Internationale Veröffentlichungsnummer: WO01082681

(56) Entgegenhaltungen:
- WO-A-88/04521
- DE-A- 4 234 737
- DE-A- 19 639 145
- GB-A- 894 442
- US-A- 2 056 893
- US-A- 2 097 899

## Beschreibung

Die Erfindung betrifft einen Pflanztopf gemäß Oberbegriff des Anspruches 1. Ein derartiger Pflanztopf ist aus der DE 196 39 145 A1 (Wibmer) bekannt gewesen. Die ebene Abwicklung seines Rohlings, der zumindest den Topfmantel bildet, ist von einem unbestimmten größeren Flächengebilde in der Form abgetrennt, dass die Abwicklung (1) einem Kreisringsektor ähnelt, wobei am kürzeren Bogen (15) eine (11) der zwei geraden Längskanten einen rechten Winkel bildet, während die übrigen drei Winkel zwischen den beiden Längskanten (11 und 12) und den zwei Bögen (13 und 15) stumpf sind.
Infolgedessen wird beim Zuschneiden der Rohlingsabwicklung in erheblichem Umfang Abfall produziert, der trotz des verwendeten, ökologisch unbedenklichen Materials, z. B. einem (Trocken-) Vlies aus Kokosfasern, keinen Abnehmer findet, falls nicht große Abfallmengen anfallen. - Dies gilt auch für die z. B. aus der GB 894 442 (Fig. 1) bekannt gewesene Abwicklung in exakter Kreisringform, d. h. mit konzentrischen Bögen (1 und 2) und radialen Längskanten (3 und 4), welche aus Papier oder Pappe oder anderen Materialien auf Zellulose-Basis besteht, die im Erdreich schlecht verrotten und kaum durchwurzelbar sind wie ein bekannter einteiliger Pflanztopf, dessen Material ein tiefgezogenes Trockenvlies aus Kokosfasern mit Latex als Fasern-Bindemittel ist und bei dessen Herstellung auch zwangsläufig Materialabfall entsteht.
Der Erfindung Liegt daher die Aufgabe zugrunde, einen Pflanztopf zu schaffen, der möglichst ohne Materialabfall herstellbar sowie leicht durchwurzelbar ist und im Erdreich gut verrottet.

Diese Aufgabe ist durch jeden Pflanztopf gemäß Anspruch 1 gelöst.
Da die Materialbahn parallele Kanten aufweist und durch queres endseitiges Abtrennen einer x-ten (x > 1) Rohling-Abwicklung von der Bahn gleichzeitig an den beiden bisher zusammenhängenden Rändern der vorausgehenden Abwicklung bzw. der nachfolgenden Abwicklung zwei deckungsgleiche bogenförmige Kanten an beiden Abwicklungen entstehen, sind alle Abwicklungen, die gänzlich abfallfrei von der Materialbahn abgetrennt werden, völlig gleich gestaltet. Das trifft zwar auch auf die Herstellung des in der GB 894 442 (Fig. 2) vorgeschlagenen Pflanztopfes zu; dieser entspricht aber nicht dem Oberbegriff des Anspruches 1 und besteht wie erwähnt aus z. B. imprägniertem Papier oder feuchtigkeitsresistentem Material auf Zellulose-Basis.
Bei der Ausführungsform gemäß Anspruch 4 mit Topfboden in Kalottenform bewirkt dieser ebenso wie der seitliche Rand an der Topföffnung eine Formstabilität, die das Aufstellen bzw. Ergreifen des erfindungsgemäßen Pflanztopfes sicher ermöglicht, wenn dieser automatisch mit Erde befüllt und bepflanzt werden soll, bevor er ausgesetzt wird.

Für weitere Pflanztöpfe, bei denen der Boden nicht aus dem sich verjüngenden Ende des Rohlings gebildet werden kann, weil dessen Mantelmaterial hierfür nicht ausreicht, falls die Mantellänge nicht stark gekürzt werden soll, ist gemäß Anspruch 5 ein separater Boden vorgesehen, der gemäß Anspruch 6 erzeugt und mit jenem Mantelende verbunden sein kann, wobei der über den Boden hinausstehende asymmetrische Teil des Rohlings bei der Hitze- und Druckanwendung auf das Material an das engere Mantelende, vorzugsweise dessen Innenseite, gepresst wird, wenn nicht in Kauf genommen wird, das überstehende Rohling-Material als geringen Abfall wegzuschneiden. - Der separate Boden versteift insbesondere mit seinen Ecken das engere Mantelende, welche die Verbindungsfläche zu diesem vergrößern, und erlaubt eine Fertigung des erfindungsgemäßen Pflanztopfes aus für Mantel und Boden verschiedenem, je günstigstem Material.

Im Folgenden ist die Erfindung anhand zweier in der Zeichnung dargestellter Ausführungsbeispiele für den erfindungsgemäßen Pflanztopf im Einzelnen erläutert. Es zeigt:
- Fig. 1: die ebene Abwicklung des Rohlings der ersten Ausführungsform
- Fig. 2: die gleiche perspektivische Ansicht dieses Rohlings nach dem Aufwickeln
- Fig. 3: die gleiche perspektivische Ansicht jenes Rohlings nach Ausformen einer Kalotte
- Fig. 4: die gleiche perspektivische Ansicht des Rohlings nach Einstülpen der Kalotte und Ausformen eines Randes, also des fertigen Pflanztopfes (erstes Ausführungsbeispiel) und
- Fig. 5: eine perspektivische Ansicht des Bodens der zweiten Ausführungsform

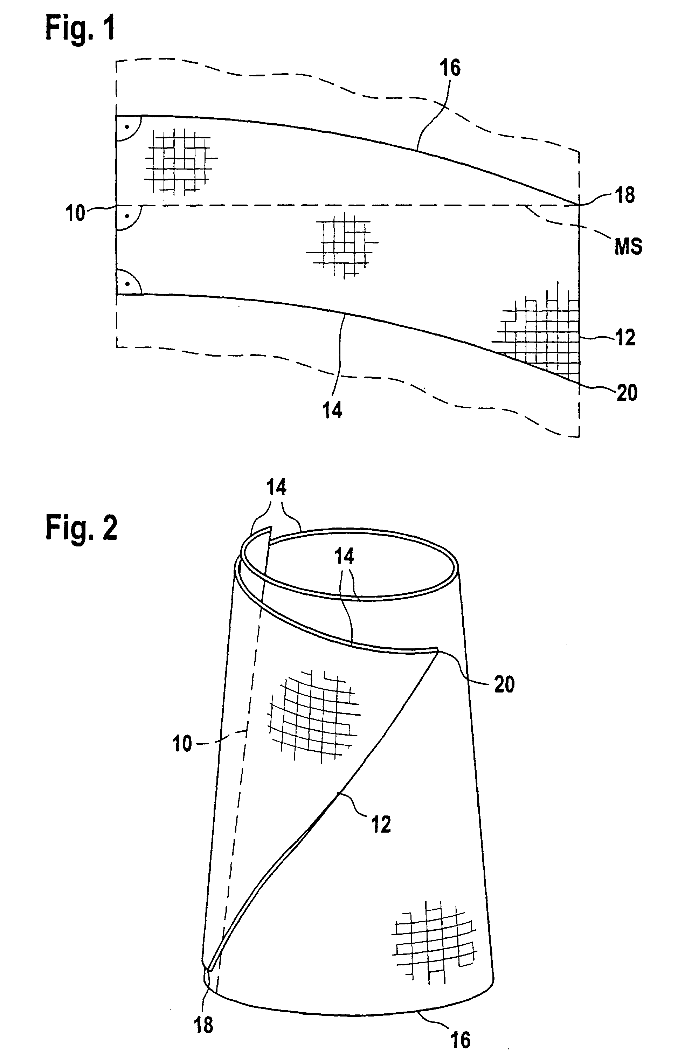

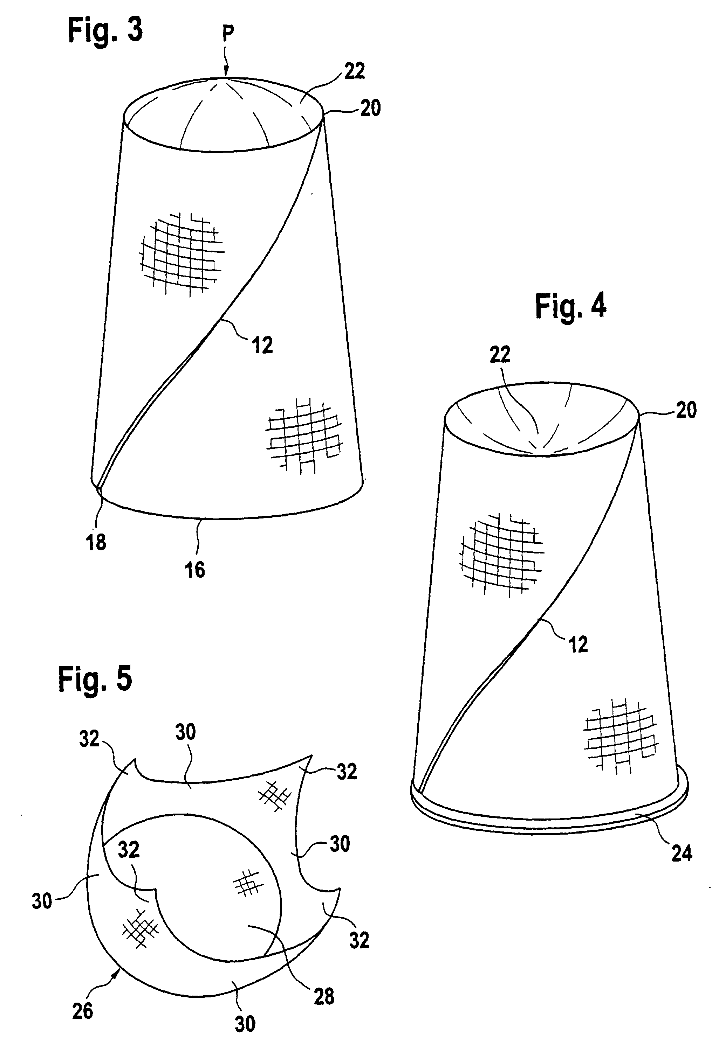

Der erfindungsgemäße Pflanztopf gemäß Fig. 4 aus Jutefädengewebe wird aus dem erfindungsgemäßen Rohling gemäß Fig. 2 gebildet, der seinerseits aus dessen ebener Abwicklung gemäß Fig. 1 geformt wird, die zwei gleich lange, parallele gerade Längskanten 10 und 12 als Abschnitte von zwei Bahnkanten eines länglichen Flächengebildes aufweist, das in Fig. 1 abgebrochen angedeutet ist und maschinell in der Weise geschnitten wurde, dass sich zwei deckungsgleiche flach-kreisbogenförmige Trennkanten 14 und 16 ergeben, die quer zur Längsrichtung des bahnförmigen Flächengebildes verlaufen und dabei mit der einen Längskante 10 je einen rechten Winkel bilden, während sie (14 und 16) mit der anderen Längskante 12 einen spitzen bzw. stumpfen Winkel bilden. Dabei liegt die stumpfwinklige Ecke 18 der Abwicklung (Fig. 1) ungefähr auf der Mittelsenkrechten MS der einen Längskante 10.

Die Abwicklung gemäß Fig. 1 wird zu dem konischen Rohling gemäß Fig. 2 in der Weise aufgewickelt, dass die bei zwei Trennvorgängen rechtwinklig aus einer Bahnkante herausgeschnittene eine Längskante 10 innen liegt und ungefähr längs einer Kegelmantellinie verläuft, während die schiefwinklig herausgeschnittene andere Längskante 12 außen liegt und ungefähr unter 45° eine andere Kegelmantellinie kreuzt, wobei die spitzwinklige Ecke 20 der Abwicklung (Fig. 1) auf der Außenseite des Rohlings (Fig. 2) liegt und der vollständig außenliegende Abwicklungsrand entlang der anderen Längskante 12 z. B. mittels Polyoleophin oder eines anderen umweltverträglichen Klebemittels angeklebt ist. - Dabei verlaufen die Trennkanten 14 und 16 nicht längs Kreislinien in parallelen Ebenen, sondern längs je einer Schraubenlinie verschiedener Steigung.
Zur Umformung des Rohlings (Fig. 2) in die Zwischenform gemäß Fig. 3 werden beheizte Pressformen verwendet, welche am sich verjüngenden Ende des Rohlings eine außen konvexe Kalotte 22 ausgestalten, an deren Scheitel eine Tropföffnung liegen kann. Zur abschließenden Umformung des Rohlings mit Kalotte 22 (Fig. 3) werden wiederum beheizte Pressformen verwendet, welche die Kalotte 22 unter Druckbelastung p nach innen stülpen, sodass sie von außen als konkaver Topf-Boden erscheint. Gleichzeitig wird an dem sich erweiternden Ende des Rohlings (Fig. 2) ein schmaler flanschartiger Rand 24 ausgeformt, ebenfalls mittels beheizter Pressformen.

Die zweite Ausführungsform unterscheidet sich von der zuvor beschriebenen ersten gemäß Fig. 5 durch einen anderen Topf-Boden 26, der nicht aus einer mit dem Topf-Mantel (Rohling gemäß Fig. 2) ein Stück bildenden Kalotte (22) geformt, sondern separat hergestellt sowie form- und kraftschlüssig mit dem Mantel (Rohling gemäß Fig. 2) verbunden ist.
Dazu besteht der Boden 26 aus einer kreisrunden Platte 28, von der durch Hitze- und Druckeinwirkung auf eine quadratische ebene Abwicklung ein ringförmiger Rand 30 hochgezogen worden ist, an den beim selben Umformvorgang nach oben vier ungefähr rechtwinklige gewölbte Ecken (der Abwicklung) 32 in der Weise angeformt worden sind, dass der Boden-Rand 30 und die Ecken 32 gemeinsam eine dem verjüngten Ende des Mantels (Rohling gemäß Fig. 2) entsprechende Konizität aufweisen, dank deren der Boden-Rand formschlüssig in dieses Mantelende passt. Zur Sicherung der Position des Bodens 26 sind dessen Rand 30 und die Ecken 32 mit dem Mantel (Rohling gemäß Fig. 2) verklebt, wobei der über den Boden hinausstehende asymmetrische Teil des Rohlings bei der Hitze- und Druckanwendung auf das Material an das engere Mantelende gepresst wird.
Bei dieser zweiten Ausführungsform besteht der Boden 30 wie der Mantel (Rohling gemäß Fig. 2) aus einem luftdurchlässigen getrockneten Nassvlies, erzeugt hauptsächlich aus Kokosfasern, bei dessen Herstellung diesen Polyvenylalkohol (PVA)-Fasern als Bindemittel zugemischt worden ist, das unter Hitze- und Druckanwendung den Boden-Rand 30 und die Ecken 32 mit dem sich verjüngenden Mantelende verklebt, sodass ein besonderes Klebemittel entfällt.

## Patentansprüche

1. Pflanztopf mit einem konischen Mantel, hergestellt aus einer einzigen, viereckigen, ebenen Abwicklung eines konischen Rohlings hauptsächlich aus Kokosfasernvlies, welche von einem größeren Flächengebilde abgetrennt ist und zwei gerade Längskanten, von denen die außenliegende angeklebt ist, sowie zwei bogenförmige Trennkanten aufweist; und mit einem Boden sowie einem an der oberen Topföffnung angeformten Rand, **dadurch gekennzeichnet, dass** die Abwicklung von einem bahnförmigen Flächengebilde mit zwei parallelen Bahnkanten als geraden Längskanten (10 und 12) quer abgetrennt ist und zwei deckungsgleiche Trennkanten (14 und 16) aufweist, wobei zumindest der Mantel aus einem luftdurchlässigen getrockneten Nassvlies aus den Kokosfasern besteht.

2. Pflanztopf nach Anspruch 1, dessen Boden aus einem Gewebe, erzeugt aus Jutefäden, besteht, **dadurch gekennzeichnet, dass** das Jutegewebe weitmaschig ist.

3. Pflanztopf nach Anspruch 1 oder 2, wobei eine (10) der beiden geraden Längskanten (10 und 12) der Abwicklung mit einer (14) der beiden kreisbogenförmigen Trennkanten (14 und 16) derselben einen rechten Winkel bildet, **dadurch gekennzeichnet, dass** diese Längskante (10) auch mit der anderen Trennkante (16) einen rechten Winkel bildet und ihre Mittelsenkrechte (MS) die stumpfwinklige Ecke (12) der Abwicklung ungefähr trifft.

4. Pflanztopf nach einem der Ansprüche 1 bis 3, mit einem eingestülpten kalottenförmigen Boden (22) aus dem unter Hitze- und Druckanwendung umgeformten sich verjüngenden Ende des Rohlings und mit einem flanschartigen Rand (24) aus dem unter Hitze- und Druckanwendung umgeformten sich erweiternden Ende des Rohlings.

5. Pflanztopf nach einem der Ansprüche 1 bis 3, dessen separater Boden (26) aus einer einzigen quadratischen ebenen Abwicklung, die von einem größeren Flächengebilde abgetrennt ist, durch Umformen der vier Ränder der Abwicklung unter Hitze- und Druckanwendung hergestellt ist und infolgedessen einen hochgezogenen ringförmigen Rand (30) mit vier nach oben angeformten, ungefähr rechtwinkligen gewölbten Ecken (32) aufweist, wobei der Boden-Rand (30) und die Ecken (32) gemeinsam eine dem sich verjüngenden Ende des Mantels entsprechende Konizität haben.

6. Pflanztopf nach Anspruch 5, **dadurch gekennzeichnet, dass** auch der Boden (26) aus dem Nassvlies besteht, bei dessen Herstellung den Kokosfasern Polyvenylalkohol (PVA)-Fasern als Bindemittel zugemischt worden sind, das unter Hitze- und Druckanwendung den in das sich verjüngende Ende des Mantels eingesetzten Boden-Rand (30) und die Ecken (32) daran mit diesem Mantelende verklebt.

## Claims

1. Plant pot with a conical casing, produced from a single, four-sided flat development of a conical blank principally of coconut fibre fleece, which is separated from a larger flat format and which has two straight longitudinal edges, of which the outwardly disposed one is glued, and two curved separating edges, and with a base as well as an edge formed at the upper part opening, **characterised in that** the development is transversely separated from a strip-shaped flat format with two parallel strip edges as straight longitudinal edges (10 and 12) and has two congruent separating edges (14 and 16), where at least the casing consists of an air-permeable, dried wet fleece of the coconut fibres.

2. Plant pot according to claim 1, the base of which consists of a material produced from jute strands, **characterised in that** the jute material is coarse-meshed.

3. Plant pot according to claim 1 or 2, wherein one (10) of the two straight longitudinal edges (10 and 12) of the development forms a right angle with one (14) of the two circularly arcuate separating edges (14 and 16), **characterised in that** this longitudinal edge (10) also forms a right-angle with the other separating edge (16) and its mean perpendicular (MS) approximately meets the obtuse-angled corner (12) of the development.

4. Plant pot according to one of claims 1 to 3, with a turned-in, dome-shaped base (22), which consists of the narrowing end of the blank reshaped under application of heat and pressure, and with a flange-like edge (24), which consists of the widening end of the blank reshaped under application of heat and pressure.

5. Plant pot according to one of claims 1 to 3, the separate base (26) of which consists of a single, square, flat development which is separated from a larger flat format and is produced by reshaping the four edges of the development under application of heat and pressure and in consequence of which has an upwardly drawn, annular edge (30) with four upwardly integrally formed, approximately right-angular curved comers (32), wherein the base edge (30) and the corners (32) have a conicity corresponding with the narrowing end of the casing.

6. Plant pot according to claim 5, **characterised in that** the base (26) also consists of the wet fleece, in the manufacture of which polyvinylalcohol (PVA) fibres have been admixed as binder to the coconut fibres, and is bonded under application of heat and pressure at the base edge (30), which is inserted into the narrowing end of the casing, and the comers (32) thereat are together with this casing end.

## Revendications

1. Pot de plantation comprenant une surface latérale conique fabriquée à partir d'un seul développement plan quadrangulaire d'une ébauche conique, principalement en non tissé de fibres de coco, qui est séparé d'une structure plane plus grande et qui a deux bords longitudinaux droits dont celui à l'extérieur est collé, ainsi que deux bords de séparation en arc ; et un fond ainsi qu'un bord issu de l'ouverture supérieure du pot,
**caractérisé en ce que** le développement est séparé transversalement d'une structure plane en bande ayant deux bords de bande parallèles en tant que bords longitudinaux (10 et 12) droits et a deux bords de séparation (14 et 16) coïncidents, au moins la surface latérale se composant d'un non tissé en voie humide, séché et perméable à l'air, en fibres de coco.

2. Pot de plantation selon la revendication 1, dont le fond est en un tissu fabriqué en fils de jute, **caractérisé en ce que** le tissu de jute a de larges mailles.

3. Pot de plantation selon la revendication 1 ou 2, pour lequel l'une (10) des deux bords longitudinaux (10 et 12) droits du développement fait un angle droit avec l'un (14) des deux bords de séparation (14 et 16) en arc de cercle, **caractérisé en ce que** ce bord longitudinal (10) fait aussi un angle droit avec l'autre bord de séparation (16) et sa médiatrice (MS) touche approximativement le coin en angle obtus (12) du développement.

4. Pot de plantation selon l'une des revendications 1 à 3, ayant un fond en forme de calotte retroussée dans l'extrémité s'amincissant de l'ébauche façonnée en utilisant la chaleur et la pression et un bord (24) en forme de collet dans l'extrémité s'élargissant de l'ébauche façonnée en utilisant la chaleur et la pression.

5. Pot de plantation selon l'une des revendications 1 à 3, dont le fond (26) distinct constitué en un seul développement plan carré, qui est séparé d'une plus grande structure plane, est fabriqué par façonnage des quatre bords du développement en utilisant la chaleur et la pression et a en conséquence un bord annulaire relevé (30) avec quatre coins (32) coudés approximativement en angle droit qui en sont issus vers le haut, le bord de fond (30) et les coins (32) ayant ensemble une conicité correspondant à l'extrémité s'amincissànt de la surface latérale.

6. Pot de plantation selon la revendication 5, **caractérisé en ce que** le fond (26) est également en le non tissé en voie humide, lors de la fabrication duquel on a rajouté aux fibres de coco des fibres en alcool polyvinylique (PVA) en tant que liant, qui colle à cette extrémité de la surface latérale le bord du fond (30) introduit dans l'extrémité s'amincissant de la surface latérale et les coins (32) en utilisant la chaleur et la pression.
